# EUROPEAN PATENT APPLICATION

(11) **EP 2 607 410 A1**
(43) Date of publication of application: **26.06.2013**
(21) Application number: 12821558.9
(22) Date of filing: 27.07.2012
(51) Int. Cl.: C08J 5/08, C08K 7/14, C08L 83/04, G02B 5/02

(54) **LIGHT-DIFFUSING NON-COMBUSTIBLE COMPOSITE MEMBER**

(30) Priority: 08.08.2011 JP 2011173008
(71) Applicant: Nitto Denko Corporation, Ibaraki-shi, Osaka 567-8680 (JP)
(72) Inventor: DOI, Kohei, Ibaraki-shi Osaka 567-8680 (JP); NAGASAKI, Kunio, Ibaraki-shi Osaka 567-8680 (JP); SUGINO, Yusuke, Ibaraki-shi Osaka 567-8680 (JP); HIDA, Takafumi, Ibaraki-shi Osaka 567-8680 (JP); NAKAYAMA, Yusuke, Ibaraki-shi Osaka 567-8680 (JP); HIRANO, Keisuke, Ibaraki-shi Osaka 567-8680 (JP)
(74) Representative: Grünecker, Kinkeldey, Stockmair & Schwanhäusser
(86) International application number: PCT/JP2012/069106
(87) International publication number: WO 2013/021837

(57) **Abstract**

There is provided a light diffusing flame-resistant composite member which has both flame resistance and flexibility and has excellent light diffusibility. The light diffusing flame-resistant composite member of the present invention includes a glass fiber sheet and a condensation-reactive silicone resin, wherein at least one surface of the glass fiber sheet is coated with the condensation-reactive silicone resin, or the glass fiber sheet is impregnated with the condensation-reactive silicone resin, and wherein the composite member has a total light transmittance of 60% or more and a haze value of 80% or more. The condensation-reactive silicone resin may be an inorganic oxide particle-containing condensation-reactive silicone resin comprising a crosslinking structure in which inorganic oxide particles dispersed in a polysiloxane resin having a condensation-reactive group is crosslinked with the polysiloxane resin by chemical bonds.

## Description

### Technical Field

The present invention relates to a light diffusing flame-resistant composite member, particularly to a light diffusing flame-resistant composite member formed from a glass fiber sheet and a condensation-reactive silicone resin.

### Background Art

Conventionally, there has been known a light diffusing member for uniformly diffusing light from a light source for illumination prepared by applying an inorganic coating agent to a glass fiber sheet. However, a light diffusing member prepared by coating or impregnating a glass fiber sheet with a common inorganic coating agent has a problem of low flame resistance when a binder includes an organic component and has a disadvantage of low flexibility to be easily cracked when the binder is an inorganic component.

Patent Literature 1 discloses a glass fiber sheet for light diffusion comprising a glass fiber fabric having specific physical properties with a resin coating layer made of a fluororesin formed on at least one surface side thereof, wherein the glass fiber sheet has a total light transmittance of 50% or more and a parallel light transmittance of 5% or less. However, the glass fiber sheet for light diffusion has a not-so-high flame resistance level and has low flexibility. Note that although this literature describes that the resin coating layer is made of a fluororesin or a silicone resin, a silicone resin is not described in the specification and no example using a silicone resin is found in Examples. If silicone oil or silicone rubber which is a general-purpose silicone resin is used for the resin coating layer, the resulting sheet will have poor flame resistance and insufficient transparency.

Patent Literature 2 discloses a light diffusing sheet comprising at least one glass fiber fabric and a pair of resin layers sandwiching the glass fiber fabric, wherein the resin layer comprises a thermosetting resin such as vinyl ester or a photocurable resin. Further, Patent Literature 3 discloses a glass fiber sheet comprising at least one glass fiber fabric, a resin coating layer made of a thermosetting resin, wherein the glass fiber fabric is impregnated with the thermosetting resin followed by solidification of the resin to form the coating layer, and a bead layer on at least one surface of the resin coating layer. However, all of these light diffusing sheets have insufficient flame resistance and low flexibility.

### Citation List

### Patent Literature

Patent Literature 1: Japanese Patent No. 4359967
Patent Literature 2: Japanese Patent No. 4491778
Patent Literature 3: Japanese Patent No. 4539349

### Summary of Invention

### Technical Problem

An object of the present invention is to provide a light diffusing flame-resistant composite member having both flame resistance and flexibility (bendability) and having excellent light diffusibility, and to provide a luminaire comprising the light diffusing flame-resistant composite member.

### Solution to Problem

As a result of intensive study to achieve the above object, the present inventors have found that a light diffusing flame-resistant sheet which has both flame resistance and flexibility and has excellent light diffusibility is obtained when a glass fiber sheet is coated or impregnated with a condensation-reactive silicone resin, and have completed the present invention based on these findings.

Specifically, the present invention provides a light diffusing flame-resistant composite member comprising a glass fiber sheet and a condensation-reactive silicone resin, wherein at least one surface of the glass fiber sheet is coated with the condensation-reactive silicone resin, or the glass fiber sheet is impregnated with the condensation-reactive silicone resin, and wherein the composite member has a total light transmittance of 60% or more and a haze value of 80% or more.

The condensation-reactive silicone resin may be an inorganic oxide particle-containing condensation-reactive silicone resin comprising a crosslinking structure in which inorganic oxide particles dispersed in a polysiloxane resin having a condensation-reactive group is crosslinked with the polysiloxane resin by chemical bonds.

In the inorganic oxide particle-containing silicone resin, (i) a condensation-reactive group-containing polysilsesquioxane having a basic structural unit of a T-unit, or (ii) a combination of the condensation-reactive group-containing polysilsesquioxane having a basic structural unit of a T-unit and a condensation-reactive group-containing polysiloxane having a basic structural unit of a D-unit and a T-unit is preferably used as the polysiloxane resin having a condensation-reactive group.

The light diffusing flame-resistant composite member is preferably used as an interior member for transportation equipment. The interior member for transportation equipment includes an illumination cover.

The light diffusing flame-resistant composite member preferably has a thickness of 10 to 1000 µm.

The present invention further provides an luminaire using the light diffusing flame-resistant composite member, the luminaire comprising: at least a light source for generating light used for illumination; and a cover for light diffusion comprising the light diffusing flame-resistant composite member, the cover being installed so as to cover the light source, wherein the light from the light source is emitted after passing through and being diffused by the light diffusing flame-resistant composite member.

### Advantageous Effects of Invention

Since the light diffusing flame-resistant composite member of the present invention is a composite member of a condensation-reactive silicone resin and a glass fiber sheet, it can have both flame resistance and flexibility, does not result in spread of fire when it is brought into contact with flame, and preferably does not carbonize. Further, since it is a composite member, it has an improved strength and high followability to a curved surface; therefore, the light diffusing flame-resistant composite member can also be provided as a roll. Furthermore, since it has a high haze value, the light from a light source can be efficiently diffused. Therefore, it can be particularly suitably used as a cover for light diffusion of a luminaire (illumination cover). In addition, since it has extremely high flame resistance, it is particularly useful as an interior member of transportation equipment, such as rolling stock, an airplane, a motor vehicle, a ship, an elevator, and an escalator.

### Brief Description of Drawings

[Figure 1] Figure 1 is a schematic sectional view showing an example of the light diffusing flame-resistant composite member of the present invention.
[Figure 2] Figure 2 is a schematic sectional view showing another example of the light diffusing flame-resistant composite member of the present invention.
[Figure 3] Figure 3 is a schematic sectional view showing further another example of the light diffusing flame-resistant composite member of the present invention.
[Figure 4] Figure 4 is a perspective view of a combustion test apparatus used in ignition/spread of fire and carbonizing test in Examples.

### Description of Embodiments

The light diffusing flame-resistant composite member of the present invention is a composite member comprising a glass fiber sheet and a condensation-reactive silicone resin, wherein at least one surface of the glass fiber sheet is coated with the condensation-reactive silicone resin, or the glass fiber sheet is impregnated with the condensation-reactive silicone resin, and wherein the composite member has a total light transmittance of 60% or more and a haze value of 80% or more. The total light transmittance is preferably 65% or more, more preferably 70% or more. The haze value is preferably 85% or more, more preferably 90% or more.

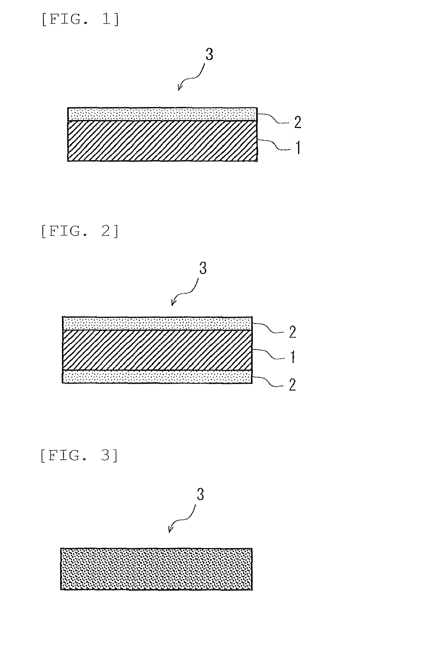

Figure 1 is a schematic sectional view showing an example of the light diffusing flame-resistant composite member of the present invention. In this example, a light diffusing flame-resistant composite member 3 has a coating layer 2 made of a silicone resin on one surface of a glass fiber sheet 1. Figure 2 is a schematic sectional view showing another example of the light diffusing flame-resistant composite member of the present invention. In this example, a light diffusing flame-resistant composite member 3 has coating layers 2 made of a silicone resin on both surfaces of a glass fiber sheet 1. Figure 3 is a schematic sectional view showing further another example of the light diffusing flame-resistant composite member of the present invention. In the light diffusing flame-resistant composite member 3 in this example, a glass fiber sheet is impregnated with a silicone resin.

### [Condensation-reactive Silicone Resin]

The condensation-reactive silicone resin is not particularly limited as long as it is a silicone resin having a condensation-reactive group, and examples thereof include a condensation-reactive group-containing polysiloxane having a basic structural unit of a D-unit and a T-unit (hereinafter, may be referred to as a "D.T-unit condensation-reactive group-containing polysiloxane"), a condensation-reactive group-containing polysilsesquioxane having a basic structural unit of a T-unit (hereinafter, may be referred to as a "condensation-reactive group-containing polysilsesquioxane"), and a condensation-reactive group-containing polysiloxane having a basic structural unit of an M-unit and a Q-unit. These may be used alone or in combination of two or more thereof.

Among the condensation-reactive silicone resins, the D-T-unit condensation-reactive group-containing polysiloxane, the condensation-reactive group-containing polysilsesquioxane, and a combination of the D·T-unit condensation-reactive group-containing polysiloxane and the condensation-reactive group-containing polysilsesquioxane are preferred in terms of being capable of providing flexibility to the composite member. In the present invention, the condensation-reactive group-containing polysilsesquioxane or a combination of the D-T-unit condensation-reactive group-containing polysiloxane and the condensation-reactive group-containing polysilsesquioxane is particularly preferred.

Examples of the condensation-reactive group include a silanol group, an alkoxysilyl group, (for example, a C₁₋₆ alkoxysilyl group), a cycloalkyloxysilyl group (for example, a C₃₋₆ cycloalkyloxysilyl group), an aryloxysilyl group (for example, a C₆₋₁₀ aryloxysilyl group). Among these groups, an alkoxysilyl group, a cycloalkyloxysilyl group, and an aryloxysilyl group are preferred, and an alkoxysilyl group is particularly preferred.

The D-T-unit condensation-reactive group-containing polysiloxane specifically contains a D-unit represented by the following formula (1) and a T-unit represented by the following formula (2) as the basic structural unit.

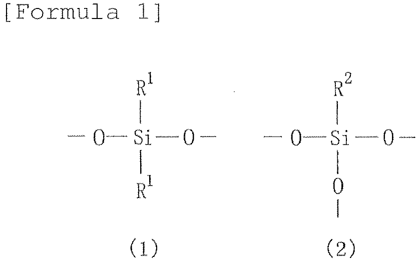

In the above formula (1), R¹ is the same or different and represents a monovalent hydrocarbon group selected from a saturated hydrocarbon group and an aromatic hydrocarbon group. In the formula (2), R² represents a monovalent hydrocarbon group selected from a saturated hydrocarbon group and an aromatic hydrocarbon group.

Examples of the saturated hydrocarbon group for the above R¹ and R² include a linear or branched alkyl group having 1 to 6 carbon atoms, such as a methyl, ethyl, propyl, isopropyl, butyl, isobutyl, pentyl, or hexyl group; and a cycloalkyl group having 3 to 6 carbon atoms, such as a cyclopentyl or cyclohexyl group. Further, examples of the aromatic hydrocarbon group for the above R¹ and R² include an aryl group having 6 to 10 carbon atoms, such as a phenyl or naphthyl group.

The R¹ and R² are each preferably an alkyl group having 1 to 6 carbon atoms and an aryl group having 6 to 10 carbon atoms, and more preferably a methyl group.

The D-unit represented by the formula (1) may be the same or different in the D-T-unit condensation-reactive group-containing polysiloxane, but it is preferably the same. The T-unit represented by the formula (2) may be the same or different in the D·T-unit condensation-reactive group-containing polysiloxane, but it is preferably the same.

Further, the D-T-unit condensation-reactive group-containing polysiloxane is a partial condensate of a corresponding silicone monomer [for example, a partial condensate of a difunctional silicone monomer, such as a dialkyl (or aryl) dialkoxysilane, and a trifunctional silicone monomer, such as an alkyl (or aryl) trialkoxysilane], and in the structural unit, it has a D-unit, a T-unit, and a group represented by the following formula (3):

-OR³ (3).

The group represented by the formula (3) is bonded to a silicon atom and is present at a molecular terminal.

The R³ represents a monovalent hydrocarbon group selected from a saturated hydrocarbon group and an aromatic hydrocarbon group. Examples of the saturated hydrocarbon group and the aromatic hydrocarbon group includes the same groups as the saturated hydrocarbon group and the aromatic hydrocarbon group for R¹ in the above formula (1). The R³ is preferably a saturated hydrocarbon group, more preferably an alkyl group having 1 to 6 carbon atoms, particularly preferably a methyl group or an ethyl group.

Examples of such the D·T-unit condensation-reactive group-containing polysiloxane include an alkoxysilyl group (for example, a C₁₋₆ alkoxysilyl group)-containing polymethylsiloxane, an alkoxysilyl group (for example, a C₁₋₆ alkoxysilyl group)-containing polymethylphenylsiloxane, and an alkoxysilyl group (for example, a C₁₋₆ alkoxysilyl group)-containing polyphenylsiloxane. These D·T-unit alkoxysilyl group-containing polysiloxanes may be used alone or in combination of two or more thereof.

The D-T-unit condensation-reactive group-containing polysiloxane is preferably a C₁₋₆ alkoxysilyl group-containing polysiloxane, more preferably a methoxysilyl. group-containing polysiloxane or an ethoxysilyl group-containing polysiloxane, most preferably a methoxysilyl group-containing polymethylsiloxane or an ethoxysilyl group-containing polymethylsiloxane.

The content of the condensation-reactive group (for example, an alkoxysilyl group) of such the D·T-unit condensation-reactive group-containing polysiloxane is, for example, 8 to 30% by weight, preferably 10 to 25% by weight, more preferably 12 to 25% by weight. The content of the condensation-reactive group (for example, an alkoxysilyl group) can be determined from the proportion of a weight loss measured in heating from room temperature to 300°C by TGA (differential weight loss measuring device).

The number average molecular weight of the D-T-unit condensation-reactive group-containing polysiloxane (in terms of standard polystyrene by GPC measurement) is, for example, in the range from 800 to 6000, preferably from 1000 to 5500, more preferably from 1200 to 5300.

As the D-T-unit condensation-reactive group-containing polysiloxane, a commercially available product (D·T-unit alkoxysilyl group-containing polysiloxane), such as trade names "X-40-9246" and "X-40-9250" (these are manufactured by Shin-Etsu Chemical Co., Ltd.), can also be used.

The condensation-reactive group-containing polysilsesquioxane specifically contains a T-unit represented by the formula (2) as the basic structural unit. The T-unit represented by the formula (2) may be the same or different in the condensation-reactive group-containing polysilsesquioxane, but it is preferably the same.

Further, the condensation-reactive group-containing polysilsesquioxane is a partial condensate of a corresponding silicone monomer [for example, a partial condensate of a trifunctional silicone monomer, such as an alkyl (or aryl) trialkoxysilane], and in the structural unit, it has a T-unit and a group represented by the following formula (4):

-OR⁴ (4).

The group represented by the formula (4) is bonded to a silicon atom and is present at a molecular terminal.

The R⁴ represents a monovalent hydrocarbon group selected from a saturated hydrocarbon group and an aromatic hydrocarbon group. Examples of the saturated hydrocarbon group and the aromatic hydrocarbon group include the same groups as the saturated hydrocarbon group and the aromatic hydrocarbon group for R¹ in the above formula (1). The R⁴ is preferably a saturated hydrocarbon group, more preferably an alkyl group having 1 to 6 carbon atoms, most preferably a methyl group or an ethyl group.

The condensation-reactive group-containing polysilsesquioxanes may be any one of a random type, a ladder type, or a basket type, but is most preferably a random type in terms of flexibility. These condensation-reactive group-containing polysilsesquioxanes may be used alone or in combination of two or more thereof.

The condensation-reactive group-containing polysilsesquioxane is preferably a C₁₋₆ alkoxysilyl group-containing polysilsesquioxane, more preferably a methoxysilyl group-containing polysilsesquioxane or an ethoxysilyl group-containing polysilsesquioxane, most preferably a methoxysilyl group-containing polymethylsilsesquioxane or an ethoxysilyl group-containing polymethylsilsesquioxane.

The content of the condensation-reactive group (for example, an alkoxysilyl group) of such the condensation-reactive group-containing polysilsesquioxane is, for example, 10 to 50% by weight, preferably 15 to 48% by weight, more preferably 20 to 46% by weight. The content of the condensation-reactive group (for example, an alkoxysilyl group) can be determined from the proportion of a weight loss measured in heating from room temperature to 300°C by TGA (differential weight loss measuring device).

The number average molecular weight of the condensation-reactive group-containing polysilsesquioxane (in terms of standard polystyrene by GPC measurement) is, for example, in the range from 200 to 6000, preferably from 300 to 3500, more preferably from 400 to 3000.

As the condensation-reactive group-containing polysilsesquioxane, a commercially available product (alkoxysilyl group-containing polysilsesquioxane), such as trade name "KR-500" and "X-40-9225" (these are manufactured by Shin-Etsu Chemical Co., Ltd.), can also be used.

The proportion of the total amount of the D·T-unit condensation-reactive group-containing polysiloxane and the condensation-reactive group-containing polysilsesquioxane to the whole polysiloxane compound is preferably 50% by weight or more, more preferably 70% by weight or more, most preferably 90% by weight or more.

In the present invention, it is particularly preferred to use the condensation-reactive group-containing polysilsesquioxane or to use the D·T-unit condensation-reactive group-containing polysiloxane and the condensation-reactive group-containing polysilsesquioxane in combination as the condensation-reactive silicone resin, in terms of flexibility, strength, flame resistance, and the like. In this case, the ratio of the D-T-unit condensation-reactive group-containing polysiloxane to the condensation-reactive group-containing polysilsesquioxane [the former/the latter (weight ratio)] is preferably 0 to 4.9, more preferably 0 to 3, most preferably 0 to 1. If the percentage of the D·T-unit condensation-reactive group-containing polysiloxane is too high, the content of an organic group will be increased, and the resulting silicone resin will be easily ignited and spread fire.

In the present invention, it is preferred to use a crosslinking structure formed by crosslinking of the condensation-reactive silicone resin with inorganic oxide particles by chemical bonds as the condensation-reactive silicone resin in terms of heat resistance and strength. For example, it is preferred to use an inorganic oxide particle-containing condensation-reactive silicone resin comprising a crosslinking structure in which inorganic oxide particles dispersed in a polysiloxane resin having a condensation-reactive group is crosslinked with the polysiloxane resin by chemical bonds. Hereinafter, the inorganic oxide particle-containing condensation-reactive silicone resin will be described.

A polysiloxane resin having a condensation-reactive group such as described above can be used. Among others, a condensation-reactive group-containing polysilsesquioxane or a combination of a D·T-unit condensation-reactive group-containing polysiloxane and the condensation-reactive group-containing polysilsesquioxane is preferred.

The inorganic oxide particles may be inorganic oxide particles having a reactive functional group on the surface of the particles, and examples thereof include silica (SiO₂ or SiO), alumina (Al₂O₃), antimony-doped tin oxide (ATO), titanium oxide (titania, TiO₂), and zirconia (ZrO₂). Among these, silica is particularly preferred. The inorganic oxide particles may be used alone or in combination of two or more thereof.

Examples of the reactive functional group include a hydroxyl group, an isocyanate group, a carboxyl group, an epoxy group, an amino group, a mercapto group, a vinyl-type unsaturated group, a halogen atom, and an isocyanurate group. Among these, a hydroxyl group is preferred. The hydroxyl group on the surface of silica particles is present as a silanol group.

The average particle size (primary particle size) of the inorganic oxide particles is generally 1 to 1000 nm, preferably 1 to 500 nm, more preferably 1 to 200 nm, most preferably 1 to 100 nm. Note that the average particle size can be measured by dynamic light scattering or the like.

The inorganic oxide particles desirably have a narrower particle size distribution and are desirably dispersed in a monodisperse state while keeping a primary particle size. Further, the surface potential of inorganic oxide particles is preferably in an acidic region (for example, a pH of 2 to 5, preferably a pH of 2 to 4). The inorganic oxide particles may have such surface potential during the reaction with a polysiloxane resin.

It is preferred to use colloidal inorganic oxide particles as the inorganic oxide particles. Examples of the colloidal inorganic oxide particles include colloidal silica (colloidal silica), colloidal alumina (alumina sol), colloidal tin oxide (tin oxide aqueous dispersion), and colloidal titanium oxide (titania sol).

Examples of the colloidal silica include a colloid of fine particles (having an average particle size of, for example, 5 to 1000 nm, preferably 10 to 100 nm) of silicon dioxide (silicic anhydride), as described in Japanese Patent Laid-Open No. 53-112732, Japanese Patent Publication No. 57-9051, Japanese Patent Publication No. 57-51653, and the like.

The colloidal silica can optionally contains, for example, alumina and sodium aluminate, and can optionally also contain a stabilizer such as an inorganic base (for example, sodium hydroxide, potassium hydroxide, lithium hydroxide, and ammonia) and an organic base (for example, tetramethylammonium).

Such colloidal silica can be produced by, but not particularly limited to, a known sol-gel method or the like, specifically, a sol-gel method as described, for example, in Werner Stober et al; J. Colloid and Interface Sci., 26, 62-69 (1968), Rickey D. Badley et al; Langmuir 6, 792-801 (1990), Journal of the Japan Society of Colour Material., 61 [9] 488-493 (1988), and the like.

The colloidal silica is preferably in a bare state where surface treatment is not applied thereto. A silanol group is present in the colloidal silica as a surface functional group.

Commercially available products can be used as such colloidal silica, and specific examples thereof include: trade names "SNOWTEX-XL", "SNOWTEX-YL", "SNOWTEX-ZL", "PST-2", "SNOWTEX-20", "SNOWTEX-30", "SNOWTEX-C", "SNOWTEX-O", "SNOWTEX-OS", "SNOWTEX-OL", and "SNOWTEX-50" (these are manufactured by Nissan Chemical Industries, Ltd.), and trade names "ADELITE AT-30", "ADELITE AT-40", and "ADELITE AT-50" (these are manufactured by Nippon Aerosil Co., Ltd.). Among these, trade names "SNOWTEX-O", "SNOWTEX-OS", "SNOWTEX-OL" and the like are particularly preferred.

Further, commercially available products can be used also as the colloidal inorganic particles other than the colloidal silica as described above, and specific examples thereof include: alumina sol (hydrosol) such as trade names "Alumina Sol 100", "Alumina Sol 200", and "Alumina Sol 520" (these are manufactured by Nissan Chemical Industries, Ltd.), titania sol (hydrosol) such as trade name "TTO-W-5" (manufactured by Ishihara Sangyo Kaisha, Ltd.) and trade name "TS-020" (manufactured by TAYCA CORP.), and a tin oxide aqueous dispersion such as trade names "SN-100D" and "SN-100S" (these are manufactured by Ishihara Sangyo Kaisha, Ltd.).

In the inorganic oxide particle-containing condensation-reactive condensation-reactive silicone resin, the content of the inorganic oxide particles is, for example, 2 to 19% by weight, preferably 3 to 17% by weight, more preferably 4 to 15% by weight. If the content of the inorganic oxide particles is too low, the mechanical strength will tend to be reduced, and if the content of the inorganic oxide particles is too high, a coating layer tends to be brittle in the case of providing the coating layer by coating at least one surface of a glass fiber sheet.

Next, a method for producing the inorganic oxide particle-containing condensation-reactive silicone resin will be described.

The inorganic oxide particle-containing condensation-reactive silicone resin can be produced, for example, by allowing the inorganic oxide particles to react with a polysiloxane resin having a condensation-reactive group (preferably, a condensation-reactive group-containing polysilsesquioxane or a D·T-unit condensation-reactive group-containing polysiloxane and a condensation-reactive group-containing polysilsesquioxane) in a solvent, preferably in the presence of an acid. Note that the polysiloxane resin has a functional group which can react with a reactive functional group on the particle surface of the inorganic oxide particles. When the reactive functional group on the particle surface of the inorganic oxide particles is a silanol group, the condensation-reactive group will react with the silanol group to form a crosslinking structure.

Examples of the solvent include water; an alcohol such as methanol, ethanol, 2-propanol, and 2-methoxyethanol; and a mixed solution thereof. Among these, a mixed solvent of water and an alcohol is preferred, more preferably a mixed solvent of water and 2-propanol, and a mixed solvent of water, 2-propanol, and 2-methoxyethanol.

Examples of the acid include inorganic acid such as hydrochloric acid, nitric acid, sulfuric acid, and phosphoric acid; and organic acid such as acetic acid and p-toluenesulfonic acid. Among these, inorganic acid is preferred, and nitric acid is particularly preferred. These acids can be used as an aqueous solution. The amount of the acid used may be an amount that can adjust the pH of a reaction system to about 2 to 5 (preferably, 2 to 4).

The reaction method is not particularly limited, and examples thereof may include any of the following methods: (i) a method of adding a mixed solution of a polysiloxane resin and a solvent to a mixed solution of inorganic oxide particles and a solvent; (ii) a method of adding a mixed solution of inorganic oxide particles and a solvent to a mixed solution of a polysiloxane resin and a solvent; and (iii) a method of adding both a mixed solution of inorganic oxide particles and a solvent and a mixed solution of a polysiloxane resin and a solvent to a solvent.

Note that when a D·T-unit condensation-reactive group-containing polysiloxane and a condensation-reactive group-containing polysilsesquioxane are used in combination as a polysiloxane resin, the inorganic oxide particles are allowed to react with the D·T-unit condensation-reactive group-containing polysiloxane and the condensation-reactive group-containing polysilsesquioxane; or the inorganic oxide particles are allowed to react first with the D·T-unit condensation-reactive group-containing containing polysiloxane and then with the condensation-reactive group-containing polysilsesquioxane; or the inorganic oxide particles are further allowed to react first with the condensation-reactive group-containing polysilsesquioxane and then with the D-T-unit condensation-reactive group-containing polysiloxane. Among these, when employing a method in which the inorganic oxide particles are allowed to react first with the condensation-reactive group silyl group-containing polysilsesquioxane and then with the D·T-unit condensation-reactive group-containing polysiloxane, the flexibility of a coating layer will be significantly improved in the case of providing the coating layer, which is made of the silicone resin, by coating at least one surface of a glass fiber sheet.

The reaction temperature is, for example, 40 to 150°C, preferably 50 to 130°C. Further, the reaction time is, for example, 0.5 to 24 hours, preferably 1 to 12 hours.

After completion of the reaction, a silicone resin composition containing an inorganic oxide particle-containing condensation-reactive silicone resin can be obtained by optionally distilling off the solvent to adjust the concentration and viscosity. The solid concentration of the silicone resin composition is, for example, 50 to 95% by weight, preferably 60 to 90% by weight in terms of handleability, coatability, impregnating ability, and the like. To this silicone resin composition, an additive such as a curing catalyst may be optionally added.

### [Glass Fiber Sheet]

The glass fiber sheet is not particularly limited, but a known glass fiber sheet, for example, a glass fiber fabric (glass cloth) can be used. The glass fiber as a material thereof may be any of, but not particularly limited to, a general-purpose nonalkali glass fiber, an acid resistant alkali glass fiber, a high strength/high elasticity glass fiber, an alkali resistant glass fiber and the like. The method for weaving the glass fiber fabric may be any of a plain weave, a twill weave, a satin weave, a basket weave, a rep weave, and the like. The diameter of a filament constituting the glass fiber is, for example, about 1 to 20 µm.

Further, the weight per unit area of the glass fiber fabric is, for example, about 10 to 300 g/m², preferably 10 to 150 g/m² in terms of durability or the impregnating ability of a condensation-reactive silicone resin.

The thickness of the glass fiber sheet is not particularly limited, but can be suitably selected depending on applications. The thickness is, for example, 10 to 1000 µm, preferably 20 to 500 µm.

### [Light Diffusing Flame-resistant Composite Member]

The light diffusing flame-resistant composite member of the present invention can be produced by coating at least one surface of the glass fiber sheet with the silicone resin composition containing the above condensation-reactive silicone resin or impregnating the glass fiber sheet with the silicone resin composition containing the above condensation-reactive silicone resin.

The coating method of the silicone resin composition containing the condensation-reactive silicone resin is not particularly limited; for example, a light diffusing flame-resistant composite member having a coating layer 2 made of a silicone resin on one surface or both surfaces of a glass fiber sheet 1 as shown in Figure 1 or Figure 2 can be obtained by directly coating the composition by a known coating method such as kiss coating, gravure coating, bar coating, spray coating, knife coating, and wire coating to form a coating film and optionally, for example, drying the film at a temperature of about 80 to 150°C. The thickness of the coating layer 2 is, for example, 1 to 200 µm, preferably 5 to 100 µm. Note that in the case of forming the coating layer 2, the inner part of the glass fiber sheet may be impregnated with a part of the silicone resin as shown in Figure 3.

Further, a method of impregnating the glass fiber sheet with the silicone resin composition containing the condensation-reactive silicone resin is also not particularly limited, but a conventional method can be employed. The light diffusing flame-resistant composite member in the form of a glass fiber sheet impregnated with a silicone resin as shown in Figure 3 can be obtained by impregnation followed by optional drying, for example, at a temperature of about 80 to 150°C.

The thickness of the light diffusing flame-resistant composite member of the present invention can be suitably selected depending on applications, but it is generally 10 to 1000 µm, preferably 20 to 500 µm.

The light diffusing flame-resistant composite member of the present invention has a total light transmittance of 60% or more and a haze value of 80% or more. These values can be adjusted by the type of the condensation-reactive silicone resin, the amount of the condensation-reactive silicone resin used for the glass fiber sheet, and the like.

The amount of the condensation-reactive silicone resin used for the glass fiber sheet is, for example, 5 to 300 parts by weight, preferably 10 to 200 parts by weight, relative to 100 parts by weight of the glass fiber sheet. If the amount is too small, the total light transmittance will be reduced, and the flame resistance and flexibility will also tend to be reduced. Further, if the amount is too large, film formability will be reduced to require a long time in the drying step to reduce the productivity or tend to reduce the smoothness of a coating film.

The light diffusing flame-resistant composite member of the present invention has flame resistance and does not result in spread of fire in the test according to the combustion test of the Japan Railway Rollingstock & Machinery Association (general materials; 45° ethyl alcohol test of nonmetallic materials for rolling stock use). Further, carbonization is not preferably observed on the surface of the composite member.

Since the light diffusing flame-resistant composite member of the present invention has both flame resistance and flexibility and is excellent in light diffusibility as described above, it can be particularly suitably used as an interior member and luminaire, especially as a cover for light diffusion (illumination cover), for transportation equipment such as rolling stock, an airplane, a motor vehicle, a ship, an elevator, and an escalator.

The luminaire of the present invention is an luminaire using the light diffusing flame-resistant composite member as described above, having at least: a light source for generating light used for illumination; and a cover for light diffusion comprising the light diffusing flame-resistant composite member, the cover being installed so as to cover the light source, wherein the light from the light source is emitted after passing through and being diffused by the light diffusing flame-resistant composite member.

In the luminaire, a method of attaching the cover for light diffusion, the arrangement of the cover for light diffusion, and the like are not particularly limited, and a known method and arrangement can be employed.

### Examples

Hereinafter, the present invention will be more specifically described with reference to Examples and Comparative Example. However, the present invention is not limited to them at all. Note that in the following description, "part" and "%" are on a weight basis unless otherwise indicated.

### Example 1

To a vessel provided with a stirrer, a reflux condenser, and a nitrogen introducing pipe, were added 15 g of a colloidal silica solution having an average particle size of 8 to 11 nm (trade name: SNOWTEX-OS, manufactured by Nissan Chemical Industries, Ltd., a solid concentration of 20%), 15 g of 2-propanol, and 5 g of 2-methoxyethanol, and thereto was added concentrated nitric acid to adjust the acidity (pH) of the solution to within the range of 2 to 4. Next, the resulting solution was heated to a temperature of 60°C, and then thereto was dropwise added a solution of 35 g of a silsesquioxane compound having a reactive methoxysilyl group at a molecular terminal (trade name: X-40-9225, manufactured by Shin-Etsu Chemical Co., Ltd., a methoxy content of 24%) dissolved in 35 g of 2-propanol, using a dropping funnel over 2 hours to allow the silsesquioxane compound to react with the surface of the colloidal silica particles. The reaction mixture was heated and stirred at 100°C for 1 hour, then cooled to room temperature (25°C), and concentrated under reduced pressure by distilling off the solvent. To the resulting mixture, was added 0.05 g of a catalyst (trade name "CAT-AC", manufactured by Shin-Etsu Chemical Co., Ltd.) to obtain a liquid transparent resin composition A. A glass cloth (trade name "E10T-4W", 100 µm in thickness, manufactured by Unitika, Ltd.) was impregnated with the transparent resin compositions A, and the resulting composite was then dried at 130°C for 5 minutes in an oven with internal air circulation to obtain a light diffusing flame-resistant composite member (glass fiber sheet-inorganic oxide particle-containing silicone resin composite). The thickness of the obtained light diffusing flame-resistant composite member was 180 µm.

### Example 2

A glass cloth (trade name "E10T-4W", 100 µm in thickness, manufactured by Unitika, Ltd.) was impregnated with a silicone coating agent (solventless inorganic coating using an organopolysiloxane as a base resin, trade name "Ceraton NP", manufactured by Suzuki Industrial Co., Ltd.), and the resulting composite was then dried at 130°C for 5 minutes in an oven with internal air circulation to obtain a light diffusing flame-resistant composite member (glass fiber sheet-silicone resin composite). The thickness of the obtained light diffusing flame-resistant composite member was 190 µm.

### Comparative Example 1

A glass cloth (trade name "`E10T-4W", 100 µm in thickness, manufactured by Unitika, Ltd.) was evaluated by itself.

### <Evaluations>

The following evaluations were performed for the light diffusing flame-resistant composite members and the like obtained in Examples and Comparative Example.

### (1) Ignition and Spread of Fire, Carbonizing Test

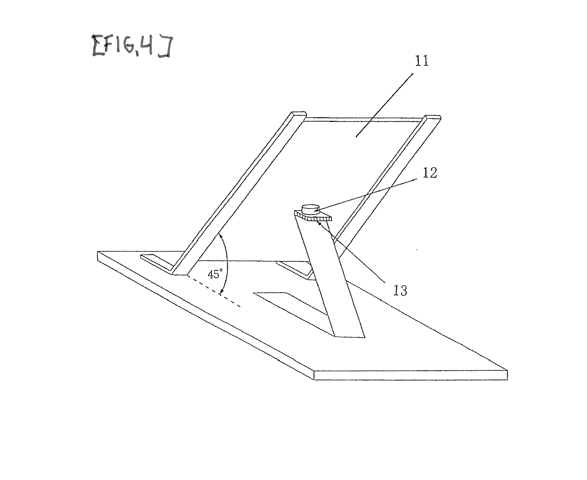

Combustion test was performed using the combustion test apparatus shown in Figure 4 and according to the combustion test of the Japan Railway Rollingstock & Machinery Association (general materials; 45° ethyl alcohol test of nonmetallic materials for rolling stock use). In Figure 4, reference numeral 11 denotes a test specimen (182 mm × 257 mm); reference numeral 12 denotes an alcohol container (17.5ϕ × 7.1 0.8t); and reference numeral 13 denotes a container pedestal (having a low thermal conductivity, such as cork). The distance from the center of the lower surface of the test specimen to the bottom surface of the container is 25.4 mm (1 inch).

A light diffusing flame-resistant composite member produced as described above (a glass cloth in the case of Comparative Example 1) was held at an inclination of 45° as shown in Figure 4; the fuel container 12 was put on the cork stand (container pedestal) 13 so that the center of the bottom of the fuel container (alcohol container) 12 might be located 25.4 mm vertically below the center of the lower surface of the test specimen; and 0.5 cc of ethyl alcohol was put into the fuel container 12, ignited, and allowed to stand until the fuel burned out. A light diffusing flame-resistant composite member (a glass cloth in the case of Comparative Example) was visually observed for the presence or absence of ignition, spread of fire, and carbonization (a state after the combustion of ethanol), and was evaluated according to the following criteria.

### <Ignition and Spread of Fire>

○: No ignition during the combustion of ethanol.
Δ: Ignition during the combustion of ethanol, but the fire does not spread but goes out during the combustion of ethanol.
•: Ignition during the combustion of ethanol, and the fire spreads and does not go out after the combustion of ethanol, or a hole opens in the test specimen.

### <Carbonization>

○: No carbonization.
Δ: Carbonization to an extent that does not reach the upper end of the test specimen.
•: Carbonization that reaches the upper end of the test specimen, or a hole opens in the test specimen.

### (2) Evaluation of Transparency

The total light transmittance (%) and the haze value (%) of a light diffusing flame-resistant composite member (a glass cloth in the case of Comparative Example) were measured according to JIS K7361 using a haze meter (trade name "HM-150", manufactured by Murakami Color Research Laboratory Co., Ltd.).

The results are shown in Table 1.

[Table 1]

**Table 1**

| | Example 1 | Example 2 | Comparative Example 1 |
|---|---|---|---|
| Ignition/Spread of fire | ○ | Δ | ○ |
| Carbonization | ○ | Δ | ○ |
| Total light transmittance (%) | 74.4 | 74.7 | 49.4 |
| Haze value (%) | 95.2 | 92.0 | 93.6 |

### Industrial Applicability

Since the light diffusing flame-resistant composite member of the present invention is a composite member of a condensation-reactive silicone resin and a glass fiber sheet, it can have both flame resistance and flexibility, does not result in spread of fire when it is brought into contact with flame, and preferably does not carbonize. Further, since it is a composite member, it has an improved strength and high followability to a curved surface; therefore, the light diffusing flame-resistant composite member can also be provided as a roll. Furthermore, since it has a high haze value, the light from a light source can be efficiently diffused. Therefore, it can be particularly suitably used as a cover for light diffusion of a luminaire (illumination cover). In addition, since it has extremely high flame resistance, it is particularly useful as an interior member of transportation equipment, such as rolling stock, an airplane, a motor vehicle, a ship, an elevator, and an escalator.

**Reference Signs List**

| | |
|---|---|
| 1 | Glass Fiber Sheet |
| 2 | Silicone Resin Coating Layer |
| 3 | Light Diffusing Flame-resistant Composite Member |
| 11 | Test Specimen |
| 12 | Alcohol Container (Fuel Container) |
| 13 | Container Pedestal |

## Claims

1. A light diffusing flame-resistant composite member comprising a glass fiber sheet and a condensation-reactive silicone resin, wherein at least one surface of the glass fiber sheet is coated with the condensation-reactive silicone resin, or the glass fiber sheet is impregnated with the condensation-reactive silicone resin, and wherein the composite member has a total light transmittance of 60% or more and a haze value of 80% or more.

2. The light diffusing flame-resistant composite member according to claim 1, wherein the condensation-reactive silicone resin is an inorganic oxide particle-containing condensation-reactive silicone resin comprising a crosslinking structure in which inorganic oxide particles dispersed in a polysiloxane resin having a condensation-reactive group is crosslinked with the polysiloxane resin by chemical bonds.

3. The light diffusing flame-resistant composite member according to claim 2, wherein, in the inorganic oxide particle-containing silicone resin, (i) a condensation-reactive group-containing polysilsesquioxane having a basic structural unit of a T-unit or (ii) a combination of the condensation-reactive group-containing polysilsesquioxane having a basic structural unit of a T-unit and a condensation-reactive group-containing polysiloxane having a basic structural unit of a D-unit and a T-unit is used as the polysiloxane resin having a condensation-reactive group.

4. The light diffusing flame-resistant composite member according to any one of claims 1 to 3, wherein the composite member is used as an interior member for transportation equipment.

5. The light diffusing flame-resistant composite member according to claim 4, wherein the interior member for transportation equipment is an illumination cover.

6. The light diffusing flame-resistant composite member according to any one of claims 1 to 5, wherein the light diffusing flame-resistant composite member has a thickness of 10 to 1000 µm.

7. An luminaire using a light diffusing flame-resistant composite member according to any one of claims 1 to 6, the luminaire comprising: at least a light source for generating light used for illumination; and a cover for light diffusion comprising the light diffusing flame-resistant composite member, the cover being installed so as to cover the light source, wherein the light from the light source is emitted after passing through and being diffused by the light diffusing flame-resistant composite member.
